# FASCICULE DE BREVET EUROPEEN

(11) **EP 0 631 037 B1**
(45) Date de publication et mention de la délivrance du brevet: **11.11.1998**
(21) Numéro de dépôt: 94109341.1
(22) Date de dépôt: 17.06.1994
(51) Int. Cl.: F01M 5/00, F01M 1/10, F28D 9/00, F28D 7/10

(54) **Echangeur de chaleur à filtre intégré**
Wärmetauscher mit integriertem Filter
Heat exchanger with integrated filter

(30) Priorité: 23.06.1993 FR 9307653
(43) Date de publication de la demande: 28.12.1994
(73) Titulaire: VALEO THERMIQUE MOTEUR, 78320 Le Mesnil Saint-Denis (FR)
(72) Inventeur: Gire, Hélène, F-92600 Asnieres (FR)
(74) Mandataire: Gamonal, Didier

(56) Documents cités:
- EP-A- 0 547 950
- WO-A-88/06228
- DE-A- 1 551 451
- DE-A- 1 551 472
- DE-A- 2 361 515
- DE-A- 3 317 008
- GB-A- 320 279
- US-A- 2 730 083

## Description

L'invention concerne un échangeur de chaleur à filtre intégré utilisable notamment pour refroidir et filtrer l'huile de lubrification d'un moteur thermique d'un véhicule automobile.

On connaît, d'après EP-A-0 344 206, un échangeur de chaleur de ce type qui comprend:
- un carter délimité par une paroi cylindrique autour d'un axe de symétrie, une première paroi d'extrémité et une seconde paroi d'extrémité,
- un compartiment de filtration disposé dans une région centrale du carter et contenant une cartouche tubulaire de filtration,
- un compartiment d'échange de chaleur de configuration annulaire, disposé entre le compartiment de filtration et la paroi cylindrique du carter,
- des moyens d'échange de chaleur disposés dans le compartiment d'échange de chaleur pour y définir une première chambre de circulation pour un premier fluide et une seconde chambre de circulation pour un second fluide,
- et dans lequel la première chambre communique, d'une part avec une première entrée pour le premier fluide, et d'autre part avec le compartiment de filtration, lequel communique avec une première sortie pour le premier fluide, cette première entrée et cette première sortie étant prévues sur la première paroi d'extrémité du carter, tandis que la seconde chambre communique avec une seconde entrée et une seconde sortie pour le second fluide, prévues sur la paroi cylindrique du carter.

Dans le cas où un tel échangeur de chaleur est utilisé pour refroidir et filtrer l'huile de refroidissement d'un moteur thermique, le premier fluide précité est constitué par cette huile, tandis que le second fluide précité est constitué par le fluide de refroidissement du moteur, c'est à dire habituellement de l'eau additionnée d'un antigel.

Dans cet échangeur de chaleur connu, les moyens d'échange de chaleur sont une simple paroi cylindrique de séparation qui divise le compartiment d'échange de chaleur pour y constituer la première chambre et la seconde chambre précitées.

La première chambre se trouve disposée entre cette paroi cylindrique de séparation et le compartiment de filtration, tandis que la seconde chambre se trouve disposée entre cette paroi cylindrique de séparation et la paroi cylindrique du carter.

Par ailleurs, la première chambre est séparée du compartiment de filtration par une paroi perforée munie d'une multiplicité de perforations réparties sur toute sa périphérie et sur toute sa hauteur.

Ces perforations sont destinées à être traversées par le premier fluide préalablement refroidi par échange thermique avec le second fluide, pour gagner le compartiment de filtration et être filtré au travers de la cartouche tubulaire de filtration. Le premier fluide traverse radialement cette cartouche tubulaire et est recueilli dans un canal central qui est relié à la première sortie de fluide prévue sur la première paroi d'extrémité du carter.

Cet échangeur de chaleur connu présente différents inconvénients.

Tout d'abord, on constate qu'une partie du premier fluide pénétrant dans la première chambre a tendance à traverser directement les perforations de la paroi perforée, qui sont situées proches de la première entrée, sans avoir subi d'échange thermique préalable avec le second fluide.

Ainsi, dans l'exemple où le premier fluide est de l'huile de lubrification qu'il convient de refroidir et filtrer, il existe toujours une partie de l'huile qui se trouve filtrée sans avoir été refroidie au préalable.

Un autre inconvénient de cet échangeur de chaleur connu réside dans le fait que les moyens d'échange de chaleur sont une simple paroi cylindrique qui, par conséquent, offre une surface d'échange minimale.

En conséquence, l'échangeur de chaleur selon EP-A-0 344 206 présente des performances d'échange thermique limitées qui ne permettent pas un refroidissement optimal du premier fluide, notamment dans le cas où ce premier fluide est de l'huile de lubrification d'un moteur.

Comme cela est, en outre, montré dans les documents DE-A-2 361 515 et EP-A-0 547 950, l'échangeur de chaleur à filtre intégré comporte une cloison cylindrique s'étendant depuis la première paroi d'extrémité jusqu'au voisinage de la seconde paroi d'extrémité pour séparer la première chambre du compartiment d'échange de chaleur et le compartiment de filtration, et ménager ainsi entre eux un passage de communication pour le premier fluide, situé dans la région de la seconde paroi d'extrémité.

Ainsi, pour parvenir dans le compartiment de filtration, le premier fluide est obligé de circuler dans la direction axiale de l'échangeur de chaleur, depuis la première entrée prévue sur la première paroi d'extrémité jusqu'au passage de communication situé dans la région de la seconde paroi d'extrémité, c'est-à-dire à l'opposé de la première entrée de fluide.

Sur tout ce trajet, le premier fluide est en contact thermique avec le second fluide par l'intermédiaire des moyens d'échange de chaleur disposés dans le compartiment d'échange de chaleur.

Il en résulte que le premier fluide est refroidi avant de parvenir dans le compartiment de filtration où il est alors filtré par la cartouche tubulaire.

Ces types d'échangeur, bien que donnant partiellement satisfaction, présentent néanmoins des inconvénients non négligeables.

En effet, le type d'échangeur décrit dans DE-A-2 361 315 n'assure pas un refroidissement efficace du premier fluide et un fonctionnement adéquat.

Dans cet échangeur, les moyens d'échange de chaleur sont constitués par un tube aileté enroulé en spire et disposé concentriquement à l'axe du carter, ce tube aileté étant parcouru par un fluide de refroidissement.

Ainsi, le premier fluide, tel que de l'huile de lubrification, va parcourir les surfaces ailetées et le tube pour échanger de la chaleur avec le fluide circulant dans le tube aileté.

Lors de cette circulation du premier fluide, celui-ci va, d'une part, être fortement ralenti par les obstacles formés par les ailettes et le tube, et, d'autre part, seule la partie du premier fluide en contact avec les ailettes et les tubes sera refroidie.

De ce fait, ce type d'échangeur n'assurera qu'un refroidissement partiel du premier fluide et une circulation ralentie de celui-ci.

Dans le document EP-A-0 547 950, les moyens d'échange de chaleur sont formés par des canaux alternés hélicoïdaux disposés sur le pourtour du carter, une partie de ces canaux servant à la circulation du fluide de refroidissement l'autre des parties de ces servent à la circulation du fluide à refroidir.

Dans ce type d'échangeur, le fluide à refroidir va subir un effort, sous l'effet centrifuge crée par les canaux hélicoïdaux, qui va freiner fortement la sortie de ce fluide par le passage de communication situé au voisinage de la seconde paroi d'extrémité.

L'invention a notamment pour but de surmonter les inconvénients précités.

Elle propose à cet effet un échangeur de chaleur à filtre intégré, du type défini en introduction et qui se caractérise par le fait que les moyens d'échange de chaleur comprennent une surface plissée de configuration tubulaire, comportant une multiplicité de plis s'étendant radialement par rapport à l'axe du carter, la première chambre étant comprise entre cette surface plissée et la cloison cylindrique, et la seconde chambre étant comprise entre cette surface plissée et la paroi cylindrique du carter.

Ainsi, grâce à l'invention, le premier fluide va être totalement refroidi et ne rencontrera aucun obstacle dans sa circulation.

Selon une autre caractéristique de l'invention, la cartouche filtrante est disposée coaxialement à l'intérieur de la cloison cylindrique et à distance de celle-ci pour ménager un passage annulaire de circulation du premier fluide provenant de la première chambre du compartiment d'échange de chaleur, via le passage de communication, et devant traverser radialement la cartouche tubulaire de filtration.

Du fait que ce passage annulaire s'étend sur toute la périphérie de la cartouche de filtration, on obtient un accès optimal du premier fluide à la cartouche.

Dans cette forme de réalisation, les plis sont avantageusement réunis deux à deux alternativement du côté radial intérieur et du côté radial extérieur par des arrondis, les plis comportant chacun des emboutis en forme de bosses, pour augmenter la surface d'échange thermique.

Selon encore une autre caractéristique de l'invention, l'échangeur de chaleur comprend un couvercle monté amovible sur la seconde paroi d'extrémité du carter pour le remplacement de la cartouche tubulaire de filtration.

Dans la description qui suit, faite seulement à titre d'exemple, on se réfère aux dessins annexés, sur lesquels :
- la figure 1 est une vue en coupe d'un échangeur de chaleur selon une forme de réalisation de l'invention, le plan de coupe passant par l'axe de symétrie du carter;
- la figure 2 est un détail de la figure 1 montrant la configuration des moyens d'échange de chaleur;
- la figure 3 est une demi-vue en coupe suivant la ligne III-II de la figure 2.
- la figure 4 est un détail de la figure 3;
- la figure 5 est un détail de la figure 4;

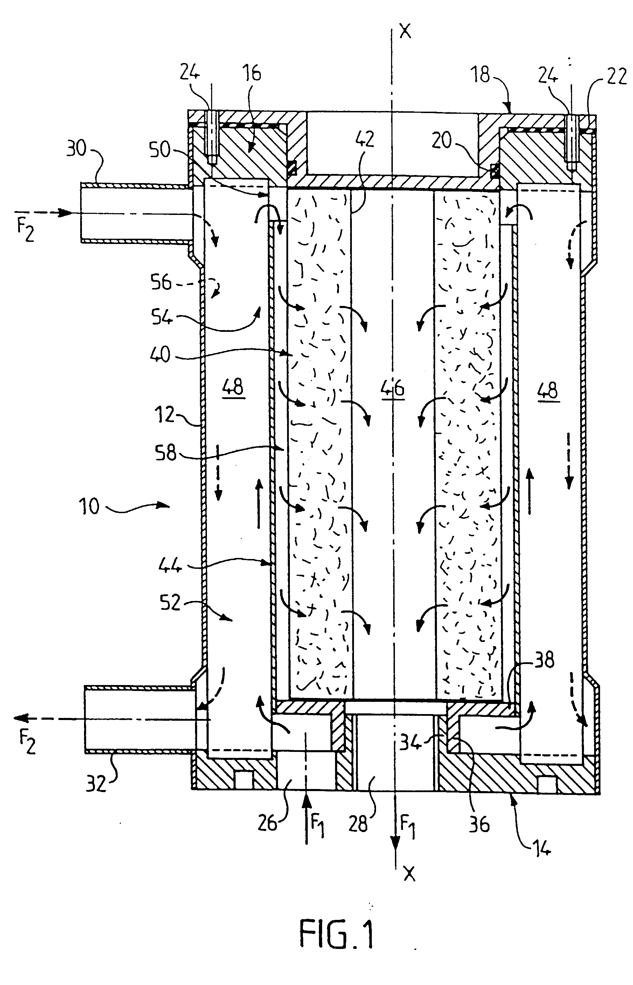

L'échangeur de chaleur représenté à la figure 1 comprend un carter 10 délimité par une paroi cylindrique 12 présentant une symétrie de révolution autour d'un axe XX, ainsi que par une première paroi d'extrémité 14 et une seconde paroi d'extrémité 16, toutes deux de forme générale circulaire. La paroi 16 a la forme générale d'un anneau sur laquelle est monté un couvercle amovible 18 avec interposition d'un joint torique 20 et d'un joint annulaire plat 22. Le couvercle 18 est fixé à la paroi 16 par l'intermédiaire de vis 24.

La première paroi d'extrémité 14 est munie d'une première entrée 26 située à distance de l'axe XX et d'une première sortie 28 située coaxialement à l'axe XX. L'entrée 26 et la sortie 28 sont prévues pour permettre à un premier fluide F1 (par exemple de l'huile de lubrification d'un moteur) de pénétrer à température élevée dans le carter et de ressortir de celui-ci après refroidissement et filtration.

L'échangeur de chaleur comprend en outre une seconde entrée 30 et une seconde sortie 32 constituées respectivement par deux tubulures raccordées à la paroi cylindrique 12, l'entrée 30 et la sortie 32 étant situées respectivement du côté de la paroi d'extrémité 16 et du côté de la paroi d'extrémité 14. Cette entrée et cette sortie sont destinées à permettre la circulation d'un second fluide F2 (par exemple le fluide de refroidissement d'un moteur thermique) à l'intérieur du carter 12.

Sur la figure 1, le trajet du fluide F1 est représenté schématiquement par des flèches continues et celui du fluide F2 par des flèches interrompues.

La paroi 14 comprend un fût cylindrique 34 s'étendant suivant l'axe XX et dirigé vers l'intérieur du carter. Autour du fût 34 s'emboîte un manchon cylindrique 36 formé d'une seule pièce avec un plateau annulaire 38. Entre le plateau 38 et le couvercle 18 est interposée une cartouche filtrante 40 de forme générale tubulaire qui s'étend dans la direction de l'axe XX. Cette cartouche peut être enlevée et remplacée après démontage du couvercle 18. Elle peut être réalisée en tout matériau approprié, par exemple en papier, en matière fibreuse, etc. La cartouche 40 délimite un passage axial interne 42 dirigé suivant l'axe XX et aligné avec la sortie 28 de la paroi 14.

L'échangeur de chaleur de la figure 1 comprend en outre une cloison cylindrique 44 qui s'étend à partir de la première paroi d'extrémité 14, plus particulièrement à partir du plateau annulaire 38 rattaché à cette dernière par l'intermédiaire du manchon 36 et du fût 34.

La cloison cylindrique 44 permet de séparer l'intérieur du boîtier 10 pour y définir un compartiment de filtration 46 disposé dans la région axiale du carter et contenant la cartouche de filtration 40. La paroi 44 permet en outre de définir un compartiment d'échange de chaleur 48, de configuration annulaire, disposé entre la cloison 44 et la paroi 12 du carter. Comme on le voit sur la figure 1, la cloison cylindrique 44 s'étend jusqu'au voisinage de la seconde paroi d'extrémité 16, ce qui permet de définir un passage de communication 50, de configuration générale annulaire, entre les compartiments 46 et 48.

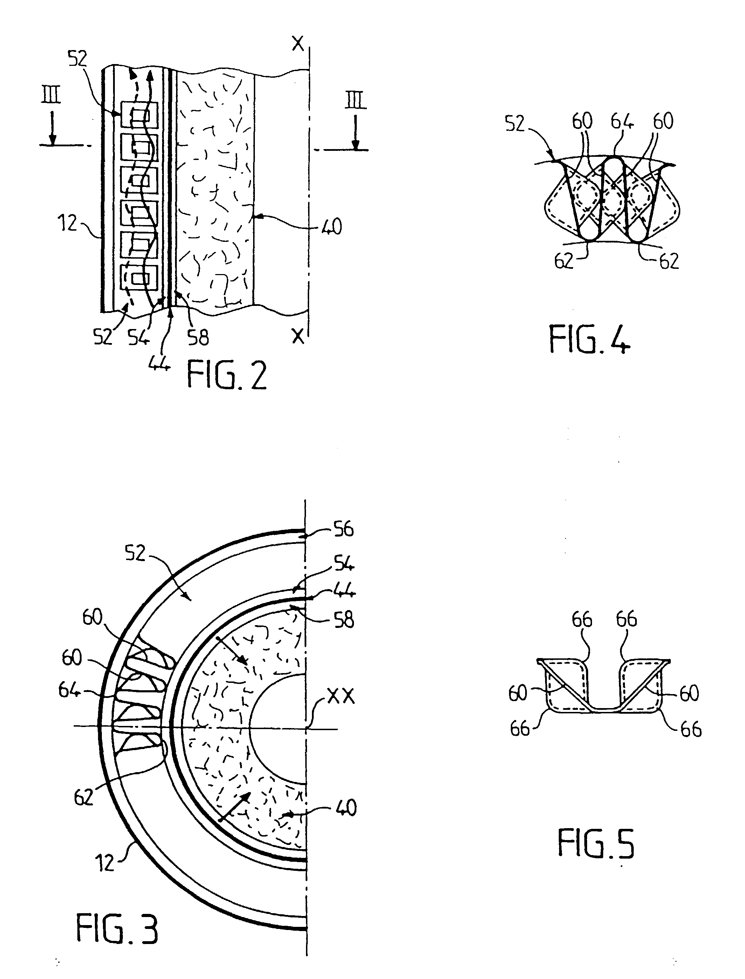

Dans le compartiment d'échange de chaleur 48 sont en outre disposés des moyens d'échange de chaleur qui sont constitués par une surface plissée 52 de configuration générale tubulaire s'étendant sur toute la hauteur du carter entre les parois 14 et 16. Le compartiment 48 est ainsi divisé en une première chambre 54 (figures 1 et 3) située entre la surface plissée 52 et la cloison cylindrique 44 et une seconde chambre 56 située entre cette surface plissée 52 et la paroi cylindrique 12.

La première chambre 54 communique d'une part avec l'entrée 26 et d'autre part avec le compartiment de filtration 46 au travers du passage de communication 50. Comme on le voit sur les figures 1 à 3, la cartouche filtrante 40 est située à distance de la cloison cylindrique 44 pour ménager un passage annulaire 58 de circulation du premier fluide.

La seconde chambre 56 est en communication avec l'entrée 30 et la sortie 32 pour le second fluide F2.

Le dispositif représenté aux figures 1 à 3 fonctionne de la façon suivante : le fluide F1 (par exemple de l'huile de lubrification) pénètre dans le boîtier 10 par l'entrée 26, circule dans la première chambre 54 où il échange de la chaleur, au travers de la surface plissée 52, avec le fluide F2 circulant à contre-courant dans la chambre 56.

Le fluide F1 quitte ensuite la chambre 54, en passant par le passage annulaire 50, pour gagner le passage annulaire 58 et traverser ensuite radialement la cartouche filtrante 40. Il est à noter que le fluide F1 ne peut gagner le compartiment de filtration 46 qu'après avoir subi un échange thermique avec le second fluide F2. Après filtration, le fluide F1 gagne le passage central 42 et ensuite la sortie 28.

Dans la forme de réalisation des figures 1 à 3, le fluide F2 vient donc en contact avec la paroi périphérique 12 du carter 10. Comme on le voit aux figures 2 et 3, la surface plissée 52 présente une configuration tubulaire et elle comporte une multiplicité de plis 60 s'étendant radialement par rapport à l'axe XX du carter, ces plis étant réunis deux à deux alternativement du côté radial intérieur et du côté radial extérieur par des arrondis 62 et 64 (figures 3 et 4). Chacun des plis 60 comporte des emboutis 66 formant des bosses et situés de part et d'autre du plan du pli. La figure 5 montre plus particulièrement la structure de ces emboutis 66 avant plissage complet de la surface plissée 62.

La présence de ces emboutis 66 permet d'augmenter la surface d'échange entre les fluides F1 et F2 et donc d'augmenter les capacités d'échange thermique.

On comprendra que la présence de ces emboutis est facultative, ces derniers n'ayant pas été représentés sur la figure 1 pour simplifier le dessin.

L'invention n'est pas limitée aux différentes formes de réalisation précitées et s'étend à d'autres variantes.

Elle trouve une application particulière au refroidissement et à la filtration de l'huile de lubrification de moteurs thermiques, notamment pour véhicules automobiles.

## Revendications

1. Echangeur de chaleur à filtre intégré, du type comprenant
- un carter (10) délimité par une paroi cylindrique (12) symétrique autour d'un axe XX, par une première paroi d'extrémité (14) et une seconde paroi d'extrémité (16),
- un compartiment de filtration (46) disposé dans une région axiale du carter et contenant une cartouche tubulaire de filtration (40);
- un compartiment d'échange de chaleur (48) de configuration annulaire disposé entre le compartiment de filtration (46) et la paroi cylindrique (12) du carter,
- des moyens d'échange de chaleur (52) disposés dans le compartiment d'échange de chaleur (48) pour y définir une première chambre (54) de circulation pour un premier fluide (F1) et une seconde chambre (56) de circulation pour un second fluide (F2),
- et dans lequel la première chambre (54) communique d'une part avec une première entrée (26) pour le premier fluide (F1) et d'autre part avec le compartiment de filtration (46), lequel communique avec une première sortie (28) pour le premier fluide (F1), cette première entrée (26) et cette première sortie (28) étant prévues sur la première paroi d'extrémité (14) du carter (10), tandis que la seconde chambre (56) communique avec une seconde entrée (30) et une seconde sortie (32) pour le second fluide (F2), prévues sur la paroi cylindrique (12) du carter,
- une cloison cylindrique (44) s'étendant depuis la première paroi d'extrémité (14) jusqu'au voisinage de la seconde paroi d'extrémité (16) pour séparer la première chambre (54) du compartiment d'échange de chaleur (48) et le compartiment de filtration (46) et ménager ainsi entre eux un passage de communication (50) pour le premier fluide (F1), ce passage étant situé dans la région de la seconde paroi d'extrémité (16),
caractérisé en ce que les moyens d'échange de chaleur comprennent une surface plissée (52) de configuration tubulaire, comportant une multiplicité de plis (60) s'étendant radialement par rapport à l'axe (XX) du carter (10) et en ce que la première chambre (54) est comprise entre cette surface plissée et la cloison cylindrique (44), tandis que la seconde chambre (56) est comprise entre cette surface plissée et la paroi cylindrique (12) du carter.

2. Echangeur de chaleur selon la revendication 1, caractérisé en ce que la cartouche filtrante (40) est disposée coaxialement à l'intérieur de la cloison cylindrique (44) et à distance de cette cloison pour ménager un passage annulaire (58) de circulation du premier fluide (F1) provenant de la première chambre (54) du compartiment d'échange de chaleur (48) via le passage de communication (50) et devant traverser radialement la cartouche tubulaire de filtration (40).

3. Echangeur de chaleur selon les revendications 1 et 2, caractérisé en ce que les plis (60) sont réunis deux à deux, alternativement du côté radial intérieur et du côté radial extérieur, par des arrondis (62, 64) et en ce que les plis (60) comportent chacun des emboutis (66) en forme de bosses.

4. Echangeur de chaleur selon l'une des revendications 1 à 3, caractérisé en ce qu'il comporte un couvercle (18) monté amovible sur la seconde paroi d'extrémité (16) du carter pour le remplacement de la cartouche tubulaire de filtration (40).

## Patentansprüche

1. Wärmetauscher mit integriertem Filter, umfassend:
- ein Gehäuse (10), das durch eine um eine Achse (XX) symmetrische zylindrische Wand (12), eine erste Abschlußwand (14) und eine zweite Abschlußwand (16) begrenzt wird,
- einen Filterraum (46), der in einem axialen Bereich des Gehäuses angeordnet ist und einen rohrförmigen Filtereinsatz (40) enthält,
- einen Wärmeaustauschraum (48) mit ringförmiger Gestaltung, der zwischen dem Filterraum (46) und der zylindrischen Wand (12) des Gehäuses angeordnet ist,
- Wärmeaustauschmittel (52), die im Wärmeaustauschraum (48) angeordnet sind, um darin eine erste Umlaufkammer (54) für ein erstes Wärmeträgermedium (F1) und eine zweite Umlaufkammer (56) für ein zweites Wärmeträgermedium (F2) zu bilden,
- und in dem die erste Kammer (54) einerseits mit einem ersten Einlaß (26) für das erste Wärmeträgermedium (F1) und andererseits mit dem Filterraum (46) in Verbindung steht, der mit einem ersten Auslaß (28) für das erste Wärmeträgermedium (F1) in Verbindung steht, wobei dieser erste Einlaß (26) und dieser erste Auslaß (28) an der ersten Abschlußwand (14) des Gehäuses (10) vorgesehen sind, während die zweite Kammer (56) mit einem zweiten Einlaß (30) und einem zweiten Auslaß (32) für das zweite Wärmeträgermedium (F2) in Verbindung steht, die an der zylindrischen Wand (12) des Gehäuses vorgesehen sind,
- eine zylindrische Zwischenwand (44), die sich von der ersten Abschlußwand (14) bis in die Nähe der zweiten Abschlußwand (16) erstreckt, um die erste Kammer (54) des Wärmeaustauschraums (48) und den Filterraum (46) zu trennen und dadurch zwischen ihnen einen Verbindungsdurchgang (50) für das erste Wärmeträgermedium (F1) zu schaffen, wobei dieser Durchgang im Bereich der zweiten Abschlußwand (16) angeordnet ist,
**dadurch gekennzeichnet,** daß die Wärmeaustauschmittel eine gefaltete Fläche (52) mit rohrförmiger Gestalt umfassen, die eine Vielzahl von Faltungen (60) enthält, die sich radial im Verhältnis zur Achse (XX) des Gehäuses (10) erstrecken, und daß die erste Kammer (54) zwischen dieser gefalteten Fläche und der zylindrischen Zwischenwand (44) enthalten ist, während die zweite Kammer (56) zwischen dieser gefalteten Fläche und der zylindrischen Wand (12) des Gehäuses enthalten ist.

2. Wärmetauscher nach Anspruch 1, **dadurch gekennzeichnet**, daß der Filtereinsatz (40) koaxial im Innern der zylindrischen Zwischenwand (44) und in einem Abstand von dieser Zwischenwand angeordnet ist, um einen ringförmigen Durchgang (58) für die Zirkulation des ersten Wärmeträgermediums (F1) zu schaffen, das durch den Verbindungsdurchgang (50) aus der ersten Kammer (54) des Wärmeaustauschraums (48) kommt und radial durch den rohrförmigen Filtereinsatz (40) strömen soll.

3. Wärmetauscher nach den Ansprüchen 1 und 2, **dadurch gekennzeichnet**, daß die Faltungen (60) paarweise abwechselnd auf der radialen Innenseite und auf der radialen Außenseite durch Rundungen (62, 64) miteinander verbunden sind und daß die Faltungen (60) jeweils Vertiefungen (66) in Form von Einbeulungen umfassen.

4. Wärmetauscher nach einem der Ansprüche 1 bis 3 , **dadurch gekennzeichnet**, daß er einen abnehmbar auf der zweiten Abschlußwand (16) des Gehäuses angebrachten Deckel (18) für die Auswechslung des rohrförmigen Filtereinsatzes (40) umfaßt.

## Claims

1. A heat exchanger incorporating a filter, of the type comprising:
- a casing (10) bounded by a cylindrical wall (12) symmetrical about an axis (XX), a first end wall (14) and a second end wall (16).
- a filter compartment (46) disposed in an axial region of the casing containing a tubular filter cartridge (40);
- a heat exchange compartment (40) of annular configuration, disposed between the filter compartment (46) and the cylindrical wall (12) of the casing,
- heat exchanger means (52) disposed in the heat exchange compartment (48) so as to define therein a first flow chamber (54) for a first fluid (F1) and a second flow chamber (56) for a second fluid (F2),
- and in which the first chamber (54) is in communication, firstly with a first inlet (26) for the first fluid (F1), and secondly with the filter compartment (46), which communicates with a first outlet (28) for the first fluid (F1), the said first inlet (26) and the said first outlet (28) being arranged on the first end wall (14) of the casing (10), while the second chamber (56) is in communication with a second inlet (30) and a second outlet (32) for the second fluid (F2), which are arranged on the cylindrical wall (12) of the casing,
- a cylindrical partition (44) extending from the first end wall (14) to the vicinity of the second end wall (16), thereby separating the first chamber (54) of the heat exchange compartment (48) from the filter compartment (46) and thus defining between them a communication passage (50) for the first fluid (F1), the said passage being situated in the region of the second end wall (16),
characterised in that the heat exchange means include a corrugated surface (52) of tubular configuration, including a multiplicity of wall elements (60) extending radially with respect to the axis (XX) of the casing (10), and in that the first chamber (54) is defined between the said corrugated surface and the cylindrical partition (44), while the second chamber (56) is defined between the said corrugated surface and the cylindrical wall (12) of the casing.

2. A heat exchanger according to Claim 1,
characterised in that the filter cartridge (40) is disposed coaxially inside the cylindrical portion (44) and at a distance from the said partition, so as to define an annular passage (58) for flow of the first fluid (Fl), which has been delivered from the first chamber (54) of the heat exchange compartment (48) via the communication passage (50) and which is to pass radially through the tubular filter cartridge (40).

3. A heat exchanger according to Claims 1 and 2,
characterised in that the wall elements (60) are joined together in pairs, alternately at the radially inner side and the radially outer side, by rounded wall portions (62, 64), and in that each wall element (60) includes press-formed portions (66) in the form of bosses.

4. A heat exchanger according to one of Claims 1 to 3,
characterised in that it includes a cover plate (18) mounted removably on the second end wall (16) of the casing for replacement of the tubular filter cartridge (40).
